# EUROPÄISCHE PATENTSCHRIFT

(11) **EP 4 388 846 B1**
(45) Veröffentlichungstag und Bekanntmachung des Hinweises auf die Patenterteilung: **19.08.2026**
(21) Anmeldenummer: 23401043.7
(22) Anmeldetag: 18.12.2023
(51) Int. Cl.: A01C 17/00, G01S 13/87

(54) **VERFAHREN ZUM AUSBRINGEN VON STREUGUT**
METHOD FOR DISTRIBUTING SPREAD MATERIAL
PROCÉDÉ DE DISTRIBUTION D'UN PRODUIT D'ÉPANDAGE

(30) Priorität: 20.12.2022 DE 102022133992
(43) Veröffentlichungstag der Anmeldung: 26.06.2024
(73) Patentinhaber: Amazonen-Werke H. Dreyer SE & Co. KG, 49205 Hasbergen (DE)
(72) Erfinder: Heisel, Per-Christian, 49205 Hasbergen (DE); Rempel, Alexander, 49205 Hasbergen (DE)

(56) Entgegenhaltungen:
- EP-A1- 2 944 173
- EP-A1- 3 711 469
- DE-A1- 102013 223 783
- US-A1- 2020 346 255

## Beschreibung

Die vorliegende Erfindung betrifft ein Verfahren zum Ausbringen von Streugut mit einem landwirtschaftlichen Streugerät, welches mindestens ein Streuorgan zur Erzeugung eines Streufächers und mindestens einen Streufächersensor zur Überwachung der Streugutverteilung innerhalb des Streufächers aufweist.

In der Landwirtschaft werden häufig verschiedenste Arten von Streugut auf Nutzflächen, wie etwa Äckern oder Weiden ausgebracht. Hierbei kann es sich beispielsweise um körniges, granulares oder pulverförmiges Streugut handeln, insbesondere Dünger oder Kalk, welches etwa zur Beeinflussung des Pflanzenwachstums auf den Nutzflächen verteilt wird.

Zum Ausbringen des Streuguts kommen in der Regel Streugeräte zum Einsatz, mit welchen eine gleichmäßige und zugleich großflächige Verteilung des Streuguts erreicht werden kann. Hierfür weisen solche Streugeräte in der Regel zwei Streuorgane auf, die oftmals nach Art von drehbar gelagerten Streuscheiben ausgebildet sind. Das auszubringende Streugut wird in der Regel auf die rotierenden Streuorgane geleitet und von diesen unter Nutzung von Zentrifugalkräften flächig verteilt. In der Regel bildet sich dabei an jedem Streuorgan ein nach hinten gerichteter Streufächer aus, über welchen das Streugut auf die Nutzfläche aufgebracht wird.

Zur Verteilung des Streuguts auf der gesamten Nutzfläche werden die Streugeräte in der Regel entlang paralleler, entsprechend der Breite der erzeugten Streufächer zueinander beabstandet angeordneten Bahnen über die Nutzfläche bewegt, wozu solche Streugeräte entweder an landwirtschaftlichen Zugmaschinen angehängt oder angebaut sein können oder alternativ auch selbstfahrend ausgebildet sein können.

Die lokale Streugutverteilung innerhalb der Streufächer, insbesondere die so genannte Querverteilung des Streuguts quer zur Laufrichtung des Streugeräts, hängt von zahlreichen Einflussfaktoren ab, wie beispielsweise Windeinflüssen, der Homogenität des Streuguts, dem Verschleißzustand der Streuorgane, einer möglichen Hanglage der Nutzfläche oder auch Beschleunigungs- und Bremsvorgängen der Zugmaschine.

Zur Vermeidung von Ungleichmäßigkeiten in der Streugutverteilung weisen moderne Streugeräte in der Regel mehrere Streufächersensoren auf, mit welchen sich die Streugutverteilung und insbesondere die Querverteilung in den Streufächern überwachen lässt.

Aus der EP 2 777 376 B1 ist beispielsweise ein Streugerät bekannt, an welchem mehrere berührungslos auf Basis von Radartechnologie arbeitende Streufächersensoren angeordnet sind. Jeder einzelne Streufächersensor überwacht dabei einen sektorartigen Ausschnitt des gesamten Streufächers. Bei detektierten Störungen und/oder Abweichungen in der Streugutverteilung können über eine Regeleinheit Parameter des Streugeräts verändert werden, um über Veränderungen in der Streugutverteilung in den sektorartigen Ausschnitten die Streugutverteilung im Streufächer insgesamt zu verbessern. Bei diesen Parametern kann es sich beispielsweise um die Rotationsgeschwindigkeit bzw. Drehzahl der Streuorgane oder die Zuleitung, insbesondere den Aufgabepunkt, des Streuguts auf die Streuorgane handeln.

Solche Streugeräte mit Streufächersensoren ermöglichen eine gleichmäßigere Verteilung des Streuguts auf der Nutzfläche und haben sich in der landwirtschaftlichen Praxis auch grundsätzlich bewährt. Allerdings tritt beim Feldeinsatz solcher Streugeräte unter ungünstigen Streubedingungen das Problem auf, dass die Sensorflächen der Streufächersensoren verschmutzen und somit fehlerhafte Messwerte der Streugut- oder Querverteilung ausgeben oder sogar gänzlich unbrauchbar werden. Eine wichtige Quelle für Verschmutzungen ist dabei neben von der Nutzfläche aufwirbelnden oder in der Umgebungsluft vorhandenen Partikeln oftmals das Streugut selbst, dessen Bestandteile und Staub sich auf den Streufächersensoren ablagern kann. In Verbindung mit Feuchtigkeit können sich mehr oder weniger harte Verkrustungen auf den Streufächersensoren bilden. Im Feldeinsatz müssen die Sensorflächen der Streufächersensoren deshalb regelmäßig gereinigt werden. Zur Reinigung der Sensorflächen wird in der DE 10 2014 106 777 A1 eine an dem Streugerät angeordnete Reinigungseinheit vorgeschlagen, welche eine Bürste, einen Wischer oder eine Düse zur Entfernung der Ablagerungen und Verkrustungen aufweist. Ein weiteres Streugerät mit Radarsensor ist offenbart in EP 3 711 469 A1.

Solche Streugeräte mit Reinigungseinheiten für die Streufächersensoren haben sich ebenfalls grundsätzlich bewährt. Allerdings kann es unter ungünstigen Streubedingungen bei solchen Streugeräten zu einer Verschmutzung der Reinigungseinheiten selbst kommen, welche deren Funktionsfähigkeit einschränken kann. So kann es etwa durch starke Verschmutzungsablagerungen zu einer Blockade der konstruktiv aufwendigen Mechanik des Wischers oder der Bürste sowie zu einer Verstopfung der Düse kommen, so dass die Entfernung der Ablagerungen und Verkrustungen auf den Streufächersensoren nicht mehr zuverlässig durchgeführt werden kann oder aufwendig von Hand durchgeführt werden muss.

Vor diesem Hintergrund stellt sich die Erfindung die **Aufgabe**, ein Verfahren zum Ausbringen von Streugut anzugeben, bei welchem die Streugutverteilung zuverlässig detektiert werden kann, ohne dass hierzu aufwendige Reinigungen der Sensorflächen der Streufächersensoren von Verkrustungen und Ablagerungen durchgeführt werden müssen.

Diese Aufgabe wird bei einem Verfahren der eingangs genannten Art durch die Merkmale des Patentanspruchs 1 **gelöst**. Vorteilhafte Weiterbildungen sind in den abhängigen Unteransprüchen angegeben.

Der Streufächersensor wird zur Sicherstellung eines verschmutzungs- und/oder ablagerungsunabhängigen Sensorbetriebs mit einem Schwingungserreger zumindest teilweise beaufschlagt. Durch die Schwingungsanregung können Verschmutzungen und/oder Ablagerungen auf dem Streufächersensoren reduziert oder entfernt werden. Insbesondere können hartnäckige Verkrustungen auf dem Streufächersensor schnell und zuverlässig aufgebrochen und gelöst werden. Durch die Schwingungsbeaufschlagung und die daraus resultierende Säuberung des Streufächersensors kann sichergestellt werden, dass die Streugutverteilung zuverlässig detektiert wird. Alternativ oder zusätzlich kann der Schwingungserreger dazu eingerichtet sein, den Streufächersensor derart mit Schwingungen zu beaufschlagen, dass Verschmutzungen und/oder Ablagerungen von vornherein bzw. während des Streubetriebs vermieden und/oder reduziert werden. Des Weiteren kann vorgesehen sein, dass der Streufächersensor vor Beginn des Streubetriebs und/oder in bestimmten, insbesondere einstellbaren, Intervallen und/oder Zeitspannen während des Streubetriebs mittels des Schwingungserregers beaufschlagt wird. Die Einsatzbereitschaft des Streufächersensors kann somit erhöht werden, ohne dass dieser in regelmäßigen Intervallen von Hand gereinigt werden muss.

Gemäß der Erfindung wird vorgeschlagen, dass der Streufächersensor zur Reinigung einer Sensorfläche mit dem Schwingungserreger mit einer von der Eigenfrequenz des Streugeräts verschiedenen Beaufschlagungsfrequenz über eine Beaufschlagungsdauer beaufschlagt wird. Durch eine derartige Ausgestaltung kann eine besonders schnelle und gründliche Reinigung der Sensorfläche erreicht werden. Insbesondere wird durch eine von der Eigenfrequenz des Streugeräts unterschiedliche Beaufschlagungsfrequenz die Effektivität der Schwingungsbeaufschlagung und damit der Reinigung bzw. Entkrustung des Streufächersensors erhöht. Besonders vorteilhaft ist es, wenn die Beaufschlagungsfrequenz und/oder die Beaufschlagungsdauer eingestellt werden können, beispielsweise zur Anpassung an den Grad der Verschmutzung des Streufächersensors.

In diesem Zusammenhang wird vorgeschlagen, dass der Streufächersensor mit mehreren Beaufschlagungsfrequenzen beaufschlagt wird, von denen mindestens eine einer Eigenfrequenz des Streufächersensors oder eines Teils des Streufächersensors entspricht. Hierdurch kann eine besonders gründliche Reinigung der Sensorfläche erreicht werden. Die Beaufschlagungsfrequenzen können auch auf vorteilhafte Art und Weise an die Art und/oder den Grad der Verschmutzung angepasst sein.

Gemäß der Erfindung wird die Überwachung der Streugutverteilung mit dem Streufächersensor während der Beaufschlagungsdauer unterbrochen

Hierdurch kann sichergestellt werden, dass die Überwachung der Streugutverteilung in dem Streufächer nicht von der Schwingungsbeaufschlagung gestört oder verfälscht wird. In diesem Zusammenhang ist es besonders vorteilhaft, wenn die Beaufschlagungsdauer möglichst kurz gewählt wird, um eine möglichst kurze Unterbrechung der Überwachung der Streugutverteilung zu ermöglichen. Ferner wird vorgeschlagen, dass die Beaufschlagungsfrequenz derart ausgewählt und eingestellt wird, dass die Überwachung der Streugutverteilung nicht gestört wird. Insbesondere kann die Beaufschlagungsfrequenz oder deren Spektrum so ausgewählt und eingestellt werden, dass diese von einer Auswerteelektronik des Streufächersensors derart herausgefiltert wird, dass diese nicht zur Überwachung bzw. Auswertung der Streugutverteilung herangezogen wird. Hierdurch kann auf vorteilhafte Weise erreicht werden, dass die Schwingungsbeaufschlagung die Detektion der Streugutverteilung in dem Streufächer nicht stört, behindert oder verfälscht.

Es hat sich in diesem Zusammenhang als vorteilhaft herausgestellt, wenn der Streufächersensor während einer Unterbrechung der Streugutausbringung mit einem Schwingungserreger zumindest teilweise beaufschlagt wird. Hierdurch kann erreicht werden, dass die Schwingungsbeaufschlagung dann stattfindet, wenn keine Streugutausbringung erfolgt und somit auch keine Streugutverteilung erfasst werden muss. Eine solche Unterbrechung der Streugutausbringung kann beispielsweise beim Wendevorgang erfolgen. Ferner kann eine Unterbrechung der Streugutausbringung auch für eines der Streuorgane erfolgen, etwa am Rand der Nutzfläche. Ein diesem Streuorgan zugeordneter Streufächersensor kann auf vorteilhafte Weise während der Unterbrechung der Streugutausbringung beaufschlagt werden.

In diesem Zusammenhang hat es sich als vorteilhaft erwiesen, wenn die Auswerteelektronik des Streufächersensors auf die Beaufschlagungsfrequenz angepasst ist. Insbesondere kann es von Vorteil sein, wenn die Auswerteelektronik zeitweise während der Schwingungsanregung die entsprechend resultierenden Störsignale herausfiltert. Hierdurch kann die Qualität der Detektion der Querverteilung des Streuguts erhöht werden.

Aus konstruktiver Hinsicht ist es vorteilhaft, wenn mehrere Streufächersensoren vorgesehen sind, welche zur Reinigung der Sensorflächen separat mit jeweils einem Schwingungserreger oder gruppenweise mit jeweils einem Schwingungserreger zumindest teilweise beaufschlagt werden. Eine derartige Ausgestaltung ermöglicht eine angepasste Reinigung der jeweiligen Streufächersensoren. Insbesondere können die einzelnen Streufächersensoren dann mit einer Schwingungsbeaufschlagung angeregt werden, wenn diese einen kritischen Verschmutzungsgrad aufweisen. Durch die separate Ansteuerung der Schwingungsanreger der einzelnen Streufächersensoren ergibt sich ferner der Vorteil, dass eine mit der Schwingungsanregung einhergehende kurzzeitige Unterbrechung der Erfassung der Streugutverteilung nur auf einen Streufächersensor begrenzt ist. In diesem Fall kann der entsprechende Streufächersensor aus der Detektion der Streugutverteilung des Streufächers ausgenommen werden. Alternativ können mehrere Streufächersensoren gleichzeitig mit dem jeweiligen Schwingungsanreger beaufschlagt werden, wobei zwar gegebenenfalls eine kurzzeitige, gleichzeitige Unterbrechung der Detektion der Streugutverteilung über dieses Streufächersensoren auftritt, was aber mit einer vereinfachten Steuerung einhergeht.

In diesem Zusammenhang wird vorgeschlagen, dass die Streufächersensoren über unterschiedliche Beaufschlagungsdauern beaufschlagt werden. Hierdurch kann auf vorteilhafte Art und Weise eine weitere Anpassung der Schwingungsbeaufschlagung auf die Gegebenheiten des jeweiligen Streufächersensors, insbesondere dessen Grad an Verschmutzung bzw. Ablagerungen, erreicht werden. Der Grad der Verschmutzung kann sensorisch erfasst werden oder als festgelegter Vorgabewert vorgegeben werden.

Es wird vorgeschlagen, dass die Streufächersensoren in Abhängigkeit ihrer Position relativ zu dem Streuorgan und/oder zu dem Streufächer über unterschiedliche Beaufschlagungsdauern beaufschlagt werden. Hierdurch kann auf die unterschiedlichen Umgebungseinflüsse reagiert werden, welche auf die an unterschiedlichen Positionen angeordneten Streufächersensoren einwirken. Da sich besonders die Staub- und/oder Schmutzbelastung in Abhängigkeit der Position der jeweiligen Streufächersensoren relativ zu dem Streuorgan und/oder zu dem Streufächer erheblich unterscheiden kann, ermöglicht eine solche Ausgestaltung eine anforderungsgerechte Beaufschlagung der Streufächersensoren. Ferner kann über eine Anpassung der Beaufschlagungsdauer an die jeweilige Verschmutzungssituation der für die Entkrustung erforderliche Energieeinsatz reduziert werden.

Um bereits im Vorfeld der Ablagerung von Partikeln und der Bildung einer Verkrustung eine Verschmutzung des Streufächersensors zu vermeiden, wird vorgeschlagen, dass der Streufächersensor zur Sicherstellung eines verschmutzungs- und/oder ablagerungsunabhängigen Sensorbetriebs mit einem Heizmittel zumindest teilweise beheizt wird. Hierdurch kann der Streufächersensor, welcher etwa aufgrund von Niederschlag oder Tau mit Wasser benetzt sein kann, durch Verdunstung der Wasserablagerungen getrocknet werden. Auf einem trockenen Streufächersensor können weniger Verschmutzungen oder sonstige Ablagerungen anhaften. Ferner können die Verschmutzungen oder Ablagerungen getrocknet werden. Trockene Verschmutzungen oder Ablagerungen behindern die Streufächererfassung weniger stark als feuchte Verschmutzungen oder Ablagerungen. Durch die Beheizung und daraus resultierende Trocknung des Streufächersensors kann sichergestellt werden, dass die Streugutverteilung zuverlässig detektiert wird. Die Einsatzbereitschaft des Streufächersensors kann somit erhöht werden, ohne dass dieser in regelmäßigen Intervallen gereinigt werden muss.

Im Hinblick auf die Ausgestaltung des Heizmittels wird vorgeschlagen, dass der Streufächersensor während der Streugutausbringung zur Trocknung einer Sensorfläche mit dem Heizmittel über eine Heizdauer mit einer Heiztemperatur beheizt wird. Über die Beheizung des Streufächersensors über eine Heizdauer mit einer Heiztemperatur kann während der Streugutausbringung eine an dem Streufächersensor, insbesondere an dessen Sensorfläche, auftretende Verschmutzung durch Feuchtigkeit getrocknet werden. Eine solche Verschmutzung durch Feuchtigkeit oder Nässe kann beispielsweise aus einer Taubildung, Niederschlag, oder aufwirbelnden Wassertropfen resultieren. Die Sensorfläche des Streufächersensors kann durch das Beheizen während der Streugutausbringung auf vorteilhafte Art und Weise freigehalten werden. Ferner kann sich die Trocknung der Sensorfläche im Hinblick auf mittels Radartechnologie arbeitende Streufächersensoren als vorteilhaft erweisen, da Radarstrahlung bzw. Radarwellen durch Feuchtigkeit absorbiert werden können. Das Beheizen eines Radarwellen aussendenden Streufächersensors zur Trocknung der Sensorfläche kann dessen Einsatzbereitschaft und Funktionsfähigkeit erhöhen.

In diesem Zusammenhang wird weiter vorgeschlagen, dass der Streufächersensor vor dem Betrieb des Streugeräts zur Trocknung der Sensorfläche mit dem Heizmittel über eine Vorheizdauer mit einer Vorheiztemperatur beheizt wird. Hierdurch kann sichergestellt werden, dass der Streufächersensor zum Beginn der Streugutausbringung einsatzbereit ist. Insbesondere kann Feuchtigkeit oder Nässe, welche etwa aus Niederschlag oder Taubildung außerhalb des Streubetriebs resultiert, auf vorteilhafte Art und Weise vor dem Streubetrieb bzw. der Streugutausbringung getrocknet werden. Das Vorheizen des Streufächersensors über eine Vorheizdauer mit einer Vorheiztemperatur kann somit auf vorteilhafte Art und Weise einen zuverlässigen Sensorbetrieb zum Start der Streugutausbringung sicherstellen. In diesem Zusammenhang hat es sich als vorteilhaft erwiesen, wenn der Streufächersensor automatisiert, insbesondere zeitgesteuert, derart über eine Vorheizdauer mit einer Vorheiztemperatur beheizt wird, dass der Streufächersensor zum Beginn der Streugutausbringung getrocknet ist. Beispielsweise kann das Vorheizen morgens eine gewisse Zeitspanne vor dem Beginn eines Arbeitstages erfolgen.

In einer vorteilhaften Ausgestaltung wird vorgeschlagen, dass die Vorheiztemperatur größer ist als die Heiztemperatur. Hierdurch wird eine schnelle Trocknung des Streufächersensors während der Vorheizdauer ermöglicht. Insbesondere kann eine starke Feuchtigkeitsverschmutzung, welche etwa aus einer erhöhten nächtlichen Taubildung resultieren kann, schnell und zuverlässig vor dem Beginn der Streugutausbringung getrocknet werden.

Es wird ferner vorgeschlagen, dass die Heiztemperatur und/oder die Vorheiztemperatur intervallweise angepasst werden. Hierdurch kann eine angepasste Beheizung ermöglicht werden, insbesondere können die Heiztemperatur und/oder die Vorheiztemperatur an die jeweils vorliegenden Umgebungsbedingungen angepasst werden. So können etwa bei einer niedrigen Umgebungstemperatur die Heiztemperatur und/oder die Vorheiztemperatur zur effektiven Trocknung des Streufächersensors erhöht werden. Bei einer steigenden Umgebungstemperatur, wie sie im Tagesverlauf in der Regel zu beobachten ist, kann die Heiztemperatur reduziert werden. Ferner können die Heiztemperatur und/oder die Vorheiztemperatur an den Grad der Feuchtigkeitsbildung auf dem Streufächersensor angepasst werden. Hierdurch kann die Trocknung des Streufächersensors auch bei unterschiedlichen Umgebungsbedingungen zuverlässig sichergestellt werden. Ferner erlaubt eine derartige Ausgestaltung eine energieeffiziente Beheizung des Streufächersensors, da die Heiztemperatur und/oder die Vorheiztemperatur, beispielsweise bei einer geringeren Feuchtigkeitsbildung, reduziert werden können, wodurch Energie eingespart werden kann. Über die intervallweise Anpassung der Heiztemperatur und der Vorheiztemperatur kann der Energieaufwand zur Trocknung und Freihaltung des Streufächersensors variabel gestaltet werden.

Als besonders vorteilhaft hat es sich erwiesen, wenn der Streufächersensor mit dem Heizmittel derart beheizt wird, dass eine Sensortemperatur stets oberhalb einer Taupunkttemperatur liegt. Eine derartige Ausgestaltung ermöglicht es, dass eine Verschmutzung durch Feuchtigkeit oder Nässe an dem Streufächersensor aufgrund von Taubildung stets sicher vermieden werden kann. Die hierfür als Referenz zu verwendende Sensortemperatur kann entweder ein von dem Bedienpersonal manuell oder automatisch festgelegter Wert sein oder über einen an dem Streufächersensor angeordneten Temperatursensor eingestellt werden.

Es wird ferner vorgeschlagen, dass die Taupunkttemperatur aus einem oder mehreren Umgebungsparametern ermittelt wird. Hierdurch kann sichergestellt werden, dass stets die aktuelle Taupunkttemperatur am Ort der Streugutausbringung verwendet wird. Dies ermöglicht eine möglichst genaue Anpassung der Sensortemperatur an den jeweiligen Wert der Taupunkttemperatur. Durch eine möglichst genaue Ermittlung der Taupunkttemperatur kann der Energieeinsatz zur Beheizung verbessert werden.

Es hat sich als vorteilhaft herausgestellt, wenn die Umgebungsparameter von einem insbesondere an dem Streugerät angeordneten Umgebungssensor erfasst werden und/oder aus einer externen Datenquelle stammen. Ein solcher an dem Streugerät angeordneter Umgebungssensor ermöglicht eine besonders genaue Erfassung der aktuellen Umgebungsbedingungen des jeweiligen Ortes der Streugutausbringung. Alternativ kann der Umgebungssensor jedoch auch an der Zugmaschine bzw. dem Traktor oder auch ortsfest, etwa am Rand der Nutzfläche oder zentral zwischen mehreren Nutzflächen, angeordnet sein. Der Umgebungssensor kann insbesondere als Wetterstation ausgebildet sein. Als externe Datenquelle für die Umgebungsparameter können beispielsweise Datenbanken oder internetbasierte Datenquellen für Umgebungsparameter dienen. Alternativ oder zusätzlich können auch historische Daten der Umgebungsparameter verwendet werden.

In diesem Zusammenhang wird vorgeschlagen, dass die Umgebungsparameter Wetterparamater und/oder Positionsparameter umfassen. Eine derartige Ausgestaltung ermöglicht auf vorteilhafte Art und Weise eine besonders genaue und zuverlässige Berücksichtigung des Wetters während der Streugutausbringung und/oder des Orts der jeweiligen Nutzfläche.

Es wird ferner vorgeschlagen, dass die Wetterparameter Temperaturparameter und/oder Feuchtigkeitsparameter und/oder Luftdruckparameter umfassen. Über diese Parameter kann eine besonders exakte Bestimmung der Taupunkttemperatur ermöglicht werden. Ferner können auch weitere Wetterparameter ermittelt oder erfasst werden, welche zur Bestimmung oder Abschätzung der Taupunkttemperatur dienen können. Beispielsweise können auch Windparameter berücksichtigt werden, welche zur Ermittlung der Gefahr von Staubbildung oder Verwirbelung des Streuguts herangezogen werden können.

Im Hinblick auf die Positionsparameter wird vorgeschlagen, dass diese Lageparameter und/oder Uhrzeitparameter umfassen. Die Lageparameter können dabei insbesondere Ortsinformationen, wie GPS-Daten und/oder Höhenangaben der jeweiligen Nutzfläche, umfassen. Die Uhrzeitparameter können neben Informationen zur Tageszeit auch Informationen zur Jahreszeit und/oder zum Sonnenstand umfassen. Ferner können auch Informationen zu der Nutzfläche, wie etwa die Bodenbeschaffenheit, insbesondere dessen Feuchtigkeit und damit die Gefahr der Staubbildung, umfasst sein.

Es hat sich ferner als vorteilhaft erwiesen, wenn die Sensortemperatur anhand eines oder mehrerer Umgebungsparameter ermittelt wird. Insbesondere kann anhand eines oder mehrere Umgebungsparameter eine Soll-Sensortemperatur vorgegeben werden. Es hat sich als vorteilhaft erwiesen, wenn die Sensortemperatur in Abhängigkeit der Temperaturparameter ermittelt wird. In einer alternativen Ausgestaltung kann die Sensortemperatur anhand eines im Streufächersensor verbauten Temperatursensors ermittelt werden. Alternativ kann auch die jeweilige Lufttemperatur oder ein anderer geeigneter Temperaturwert als Referenzwert für die Sensortemperatur verwendet werden.

Im Hinblick auf die konstruktive Ausgestaltung des Heizmittels hat es sich als vorteilhaft erwiesen, wenn das Heizmittel als elektrisches Heizmittel ausgebildet ist. Hierdurch wird eine konstruktiv simple und einfach steuerbare Beheizung des Streufächersensors ermöglicht, welche eine effektive Trocknung des Streufächersensors ermöglicht. In einer vorteilhaften Ausgestaltung kann das Heizmittel zur Stromversorgung mit der Elektrik der landwirtschaftlichen Zugmaschine wirkverbunden sein. Alternativ kann eine separate Stromversorgung vorgesehen sein.

Im Hinblick auf die Positionierung des Heizmittels wird vorgeschlagen, dass das Heizmittel außerhalb der Sensorfläche des Streufächersensors angeordnet ist. Auf diese Weise kann vermieden werden, dass das Heizmittel den Sichtbereich des Sensors beeinträchtigt oder verdeckt. Insbesondere kann das Heizmittel zumindest teilweise außenseitig am Umfang des Sichtbereichs des Streufächersensors angeordnet sein. Hierdurch kann eine effektive und effiziente Wärmeübertragung an die zu trocknende Sensorfläche des Streufächersensors ermöglicht werden. Als besonders vorteilhaft hat es sich in diesem Zusammenhang im Hinblick auf eine möglichst gleichmäßige Beheizung des Streufächersensors herausgestellt, wenn das Heizmittel zumindest teilweise außenseitig um die Sensorfläche herum angeordnet ist.

Aus konstruktiver Sicht hat es sich als vorteilhaft erwiesen, wenn das Heizmittel an einem Gehäuse des Streufächersensors angeordnet ist. Eine solche Anordnung ermöglicht eine besonders schnelle Beheizung des Streufächersensors in der unmittelbaren Nähe zum Ort der Verschmutzungen. Insbesondere kann das Heizmittel durch die Anordnung an einem Gehäuse des Streufächersensors möglichst nah an der Sensorfläche positioniert werden. Aus konstruktiver Sicht kann es in diesem Zusammenhang von Vorteil sein, wenn das Heizmittel als Einlegeteil in dem Gehäuse des Streufächersensors angeordnet ist. Hierdurch kann im Falle eines Defekts auch ein einfacher Austausch des Heizmittels ermöglicht werden. In einer weiteren vorteilhaften Ausführungsform kann das Heizmittel in direkter Nähe zu dem Streufächersensor, insbesondere auf einer Platine des Streufächersensors, angeordnet sein. Hierdurch kann die Umgebung des Streufächersensors beheizt werden.

Im Hinblick auf die konstruktive Ausgestaltung des Heizmittels wird ferner vorgeschlagen, dass dieses als zumindest teilweise um die Sensorfläche herum angeordneter Heizdraht ausgebildet ist. Hierdurch wird eine besonders gleichmäßige Erwärmung des Streufächersensors und insbesondere der Sensorfläche ermöglicht. Hierbei kann der Heizdraht je nach Anwendungsfall beispielsweise spiralförmig, zickzack-förmig oder mäandrierend an dem Gehäuse angeordnet sein. Die Anordnung des Heizdrahts kann auf einfache Art und Weise an die Erfordernisse der Sensorerwärmung und/oder an die vorliegenden Bauraumverhältnisse angeordnet werden. In einer alternativen Ausgestaltung kann das Heizmittel auch als in die Sensorfläche integriertes Heizmittel ausgeführt sein - beispielsweise als dünner, den Sensorbetrieb nicht störender Heizdraht nach Art einer Fahrzeugscheibenheizung. Alternativ oder zusätzlich zu einem elektrischen Heizdraht sind auch induktive Heizmittel oder Infrarot-Heizmittel denkbar, welche zur Verdunstung und/oder Verdampfung von auf dem Streufächersensor befindlicher Feuchtigkeit verwendet werden können. Ferner kann zur Vermeidung von Verschmutzungen vorgesehen sein, dass die Sensorfläche zumindest teilweise mit einem feuchtigkeits- oder schmutzabweisenden Material beschichtet ist.

In einer weiteren vorteilhaften Ausgestaltung wird vorgeschlagen, dass der Streufächersensor mit einer Druckluftzuführung zur Reinigung der Sensorfläche zumindest teilweise mit Druckluft beaufschlagt wird. Eine Beaufschlagung mit Druckluft kann sowohl eine zusätzliche Trocknung der Sensorfläche als auch eine Entfernung von Ablagerungen oder Verschmutzungen ermöglichen.

In diesem Zusammenhang hat es sich als vorteilhaft erwiesen, wenn der Streufächersensor während der Streugutausbringung zur Reinigung der Sensorfläche mit der Druckluftzuführung über eine Belüftungsdauer mit Druckluft beaufschlagt wird. Über die Druckluftzuführung über eine Belüftungsdauer kann einerseits während der Streugutausbringung eine an dem Streufächersensor, insbesondere an dessen Sensorfläche, auftretende Verschmutzung durch Feuchtigkeit getrocknet werden und andererseits eine bereits anhaftende Ablagerung mittels der Druckluft entfernt werden.

Es wird ferner vorgeschlagen, dass mehrere Streufächersensoren vorgesehen sind, welche separat mit den Heizmitteln zumindest teilweise beheizt werden und/oder mit der Druckluftzuführung zumindest teilweise mit Druckluft beaufschlagt werden. Mehrere Streufächersensoren erlauben auf vorteilhafte Weise eine umfassendere Erfassung des Streubilds in dem Streufächer, insbesondere der Querverteilung des Streuguts in dem Streufächer. Über eine separate Beheizung und/oder Druckluftzuführung kann ein verschmutzungs- und/oder ablagerungsunabhängiger Sensorbetrieb für jeden einzelnen Streufächersensor sichergestellt werden.

Es hat sich in diesem Zusammenhang als vorteilhaft erwiesen, wenn die Streufächersensoren über unterschiedliche Heizdauern und/oder mit unterschiedlichen Heiztemperaturen beheizt werden. Insbesondere können die Heizdauern und/oder die Heiztemperaturen an den Grad der jeweilige Verschmutzung oder Feuchtigkeitsbenetzung der Streufächersensoren angepasst werden. Bei einer starken Verschmutzung kann eine vergleichsweise lange Heizdauer und/oder eine erhöhte Heiztemperatur gewählt werden. Bei geringer Verschmutzung können niedrigere Heiztemperaturen und/oder kürzere Heizdauern gewählt werden.

In diesem Zusammenhang wird weiter vorgeschlagen, dass die Streufächersensoren in Abhängigkeit ihrer Position relativ zu dem Streuorgan und/oder zu dem Streufächer über unterschiedliche Heizdauern und/oder Vorheizdauern und/oder mit unterschiedlichen Heiztemperaturen und/oder Vorheiztemperaturen beheizt werden. Durch eine solche Ausgestaltung kann es ermöglicht werden, dass jeder Streufächersensor in Abhängigkeit seiner Exposition gegenüber Verschmutzungen individuell beheizt und/oder vorgeheizt werden kann. Insbesondere können solche Streufächersensoren, welche im Streubetrieb einer größeren Gefahr durch Verschmutzungen oder Benetzung durch Feuchtigkeit ausgesetzt sind, mit höheren Heiztemperaturen und/oder über längere Heizdauern beheizt werden, um diese zu trocknen. Außerdem können Streufächersensoren, welche aufgrund ihrer Position relativ zu dem Streuorgan und/oder zu dem Streufächer einer geringeren Exposition an Verschmutzungen ausgesetzt sind, über kürzere Heizdauern und/oder mit niedrigeren Heiztemperaturen beheizt werden. Hierdurch kann ein zuverlässiger Sensorbetrieb für sämtliche Streufächersensoren sichergestellt werden, unabhängig von deren Position relativ zu dem Streuorgan und/oder zu dem Streufächer.

Ferner wird ein landwirtschaftliches Streugerät zum Ausbringen von Streugut offenbart, welches mindestens ein Streuorgan zur Erzeugung eines Streufächers und mindestens einen Streufächersensor zur Überwachung der Streugutverteilung innerhalb des Streufächers aufweist, wobei ein Schwingungserreger zum zumindest teilweisen Beaufschlagen des Streufächersensors zur Sicherstellung eines verschmutzungs- und/oder ablagerungsunabhängigen Sensorbetriebs vorgesehen ist. Es ergeben sich die bereits im Zusammenhang mit dem Verfahren zum Ausbringen von Streugut erläuterten Vorteile.

In einer vorteilhaften Weiterbildung des Streugeräts wird vorgeschlagen, dass der mindestens eine Streufächersensor unterhalb und/oder oberhalb des Streuorgans angeordnet ist, wobei dessen Sichtbereich in einem Winkel relativ zu einer Längsachse des Streugeräts ausgerichtet ist. Hierdurch ergibt sich eine besonders zuverlässige und exakte Erfassung der Streugutverteilung in dem Streufächer.

Es hat sich als vorteilhaft herausgestellt, wenn mehrere, jeweils mindestens einen Schwingungserreger aufweisende Streufächersensoren vorgesehen sind, wobei die Streufächersensoren zur Erfassung unterschiedlicher Sichtbereiche in unterschiedlichen Erfassungswinkeln relativ zu der Längsachse des Streugeräts ausgerichtet sind. Eine solche Ausgestaltung ermöglicht eine großflächige, feiner aufgelöste und auch im Falle des Ausfalls einzelner Streufächersensoren zuverlässige Detektion der Streugutverteilung. Ferner kann über die feiner aufgelöste Erfassung der Streugutverteilung eine genauere Anpassung der Streugutverteilung ermöglicht werden.

Es wird vorgeschlagen, dass die Schwingungserreger der einzelnen Streufächersensoren separat ansteuerbar sind. Hierdurch kann sichergestellt werden, dass die einzelnen Streufächersensoren im Falle einer Verschmutzung unabhängig voneinander zur Reinigung mit einem Schwingungserreger beaufschlagt werden können. Alternativ können die Schwingungserreger der einzelnen Streufächersensoren gemeinsam angesteuert werden, was steuerungstechnisch einfacher ist.

Eine vorteilhafte Ausgestaltung sieht vor, dass die Schwingungserreger zur Einstellung unterschiedlicher Beaufschlagungsdauern und/oder Beaufschlagungsfrequenzen separat ansteuerbar sind. Hierdurch kann eine genauere Anpassung an die jeweilige Verschmutzungssituation an den Streufächersensoren ermöglicht werden.

Des Weiteren hat es sich als vorteilhaft erwiesen, wenn zwei symmetrisch zu einer Längsachse des Streugeräts angeordnete Streuorgane vorgesehen sind, welchen jeweils mehrere symmetrisch zu der Längsachse angeordnete Streufächersensoren zugeordnet sind. Ein derartiger symmetrischer Aufbau ermöglicht eine gleichmäßige Streugutausbringung in einem uniformen Streufächer. Ferner wird die Erfassung der Streugutverteilung in dem Streufächer durch den symmetrischen Aufbau aus steuerungstechnischer Sicht vereinfacht. Alternativ kann jedoch auch eine unsymmetrische Anordnung der Streuorgane und/oder der Streufächersensoren vorgesehen sein, wenn sich dies im jeweiligen Anwendungsfall als vorteilhaft herausstellt.

Es wird ferner ein landwirtschaftliches Streugerät zum Ausbringen von Streugut, mit mindestens einem Streuorgan zur Erzeugung eines Streufächers und mindestens einem Streufächersensor zur Überwachung der Streugutverteilung innerhalb des Streufächers vorgeschlagen, welches ein Heizmittel zum zumindest teilweisen Beheizen des Streufächersensors zur Sicherstellung eines verschmutzungs- und/oder ablagerungsunabhängigen Sensorbetriebs aufweist. Bei diesem Streugerät ergeben sich die vorstehend im Zusammenhang mit dem Verfahren zum Ausbringen von Streugut erläuterten Vorteile. Eine derartige Ausgestaltung erlaubt insbesondere eine Erhöhung der Einsatzbereitschaft des Streugeräts, da eventuelle Feuchtigkeits- und/oder Schmutzablagerungen auf dem Streufächersensor über das Heizmittel getrocknet werden können. Auf einem trockenen Streufächersensor können Verschmutzungen oder Ablagerungen schlechter anhaften, weshalb der entsprechende Streufächersensor entsprechend weniger häufig gereinigt werden muss.

Es wird ferner vorgeschlagen, dass das landwirtschaftliche Streugerät mehrere, jeweils ein Heizmittel aufweisende Streufächersensoren aufweist, wobei die Streufächersensoren zur Erfassung unterschiedlicher Sichtbereiche in unterschiedlichen Erfassungswinkeln relativ zu der Längsachse des Streugeräts ausgerichtet sind. Eine solche Ausgestaltung ermöglicht eine möglichst großflächige Erfassung des Streufächers zur möglichst genauen Erfassung der Streugut- bzw. Querverteilung in dem Streufächer.

In diesem Zusammenhang wird ferner vorgeschlagen, dass die Heizmittel der einzelnen Streufächersensoren separat ansteuerbar sind. Hierdurch wird insbesondere ermöglicht, dass die Heizmittel der einzelnen Streufächersensoren unabhängig voneinander ein- bzw. ausgeschaltet werden können. Hierdurch kann eine anforderungsgerechte Beheizung der einzelnen Streufächersensoren sichergestellt werden. Beispielsweise können diejenigen Streufächersensoren, welche einer stärkeren Exposition von Verschmutzungen ausgesetzt sind, über längere Heizdauern und/oder mit höheren Heiztemperaturen beaufschlagt werden. In weniger exponierten Bereichen angeordnete Streufächersensoren können entsprechend über kürzere Heizdauern und/oder mit niedrigeren Heiztemperaturen beheizt werden. Hierdurch wird eine angepasste Beheizung der einzelnen Streufächersensoren ermöglicht, welche zudem einen effizienten Energieeinsatz zur Trocknung sicherstellt. In einer alternativen Ausgestaltung sind die Heizmittel nur gemeinsam oder gruppenweise ansteuerbar. Hierdurch ergibt sich ein geringerer Steuerungsaufwand.

In einer besonders bevorzugten Ausführungsform sind die Heizmittel der einzelnen Streufächersensoren zur Einstellung unterschiedlicher Heizdauern und/oder Heiztemperaturen und/oder Vorheizdauern und/oder Vorheiztemperaturen separat ansteuerbar. Eine derartige Ausgestaltung ermöglicht eine exakte Anpassung der Heizdauern und/oder Heiztemperaturen und/oder Vorheizdauern und/oder Vorheiztemperaturen an die Bedingungen und Einbausituationen der jeweiligen Streufächersensoren.

In einer vorteilhaften Weiterbildung der Erfindung wird vorgeschlagen, dass das Streugerät zwei symmetrisch zu einer Längsachse des Streugeräts angeordnete Streuorgane aufweist, welchen jeweils mehrere symmetrisch zu der Längsachse angeordnete Streufächersensoren zugeordnet sind. Eine derartige Ausgestaltung ermögliche eine gleichmäßige Ausbringung des Streuguts zu beiden Seiten der Längsachse und eine zuverlässige Überwachung der Streugutverteilung in den beiden links und rechts der Längsachse des Streugeräts ausgebildeten Teilen des Streufächers. Ferner ermöglicht eine derartige Anordnung eine vergleichsweise einfache Steuerung der Heizmittel. Die Steuerung der Heizmittel der Streufächersensoren der linken bzw. rechten Streuorgane kann somit ebenfalls symmetrisch zu der Längsachse erfolgen.

Ferner wird ein Streufächersensor zur Überwachung der Streugutverteilung in einem von einem Streugerät zum Verteilen von Streugut auf einer Nutzfläche erzeugten Streufächer offenbart, welcher einen Schwingungserreger zum zumindest teilweisen Beaufschlagen des Streufächersensors zur Sicherstellung eines verschmutzungs- und/oder ablagerungsunabhängigen Sensorbetriebs aufweist. Es ergeben sich die im Zusammenhang mit dem Verfahren zum Ausbringen von Streugut und dem landwirtschaftlichen Streugerät erläuterten Vorteile.

Darüber hinaus wird ein Streufächersensor zur Überwachung der Streugutverteilung in einem von einem Streugerät zum Verteilen von Streugut auf einer Nutzfläche erzeugten Streufächer vorgeschlagen, welcher ein Heizmittel zum zumindest teilweisen Beheizen des Streufächersensors zur Sicherstellung eines verschmutzungs- und/oder ablagerungsunabhängigen Sensorbetriebs aufweist. Bei einem derartigen Streufächersensor ergeben sich ebenfalls die vorstehend in Bezug auf das Verfahren zum Ausbringen von Streugut und das landwirtschaftliche Streugerät genannten Vorteile.

Weitere Einzelheiten und Vorteile der Erfindung werden nachfolgend unter Zuhilfenahme der beigefügten Zeichnungen gemäß Fig. 1 bis 5b erläutert. Darin zeigen:
- Fig. 1: eine perspektivische Ansicht eines an eine Zugmaschine angehängten landwirtschaftlichen Streugeräts;
- Fig. 2: eine vergrößerte Detailansicht eines Ausschnitts aus der Darstellung gemäß Fig. 1;
- Fig. 3-4: zwei vergrößerte Detailansichten eines Ausschnitts aus der Darstellung gemäß Fig. 2;
- Fig. 5a: eine teilweise geschnittene Draufsicht auf ein an eine Zugmaschine angehängtes landwirtschaftliches Streugerät gemäß der Darstellung in Fig. 1;
- Fig. 5b: eine vergrößerte Teilansicht eines Ausschnitts aus der Darstellung gemäß Fig. 5a;
- Fig. 6-7: zwei weitere vergrößerte Detailansichten eines Ausschnitts aus der Darstellung gemäß Fig. 2;
- Fig. 8a: einen schematisch dargestellten, exemplarischen Verlauf der Heiztemperaturen über der Zeit, sowie
- Fig. 8b: einen schematisch dargestellten, exemplarischen Verlauf der Taupunkttemperatur sowie der Sensortemperatur basierend auf dem Verlauf der Heiztemperaturen gemäß Fig. 8a.

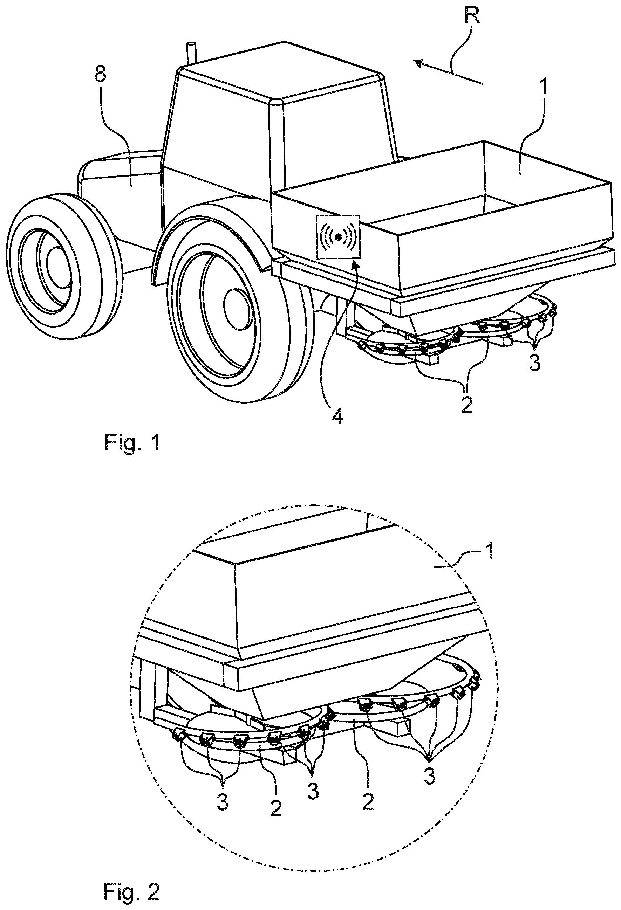

Die Darstellung in Fig. 1 zeigt in perspektivischer Draufsicht ein landwirtschaftliches Streugerät 1 zum Ausbringen von Streugut auf einer landwirtschaftlichen Nutzfläche, beispielsweise einem Getreideacker oder einer Weide. Mit dem Streugerät 1 können verschiedenste Arten von Streugut auf der Nutzfläche ausgebracht werden, insbesondere pulverförmiger oder granularer Dünger sowie Kalk. Das Streugerät 1 ist an einer landwirtschaftlichen Zugmaschine 8 angebaut, kann alternativ jedoch ebenso an die Zugmaschine 8 angehängt oder selbstfahrend ausgeführt sein.

Zum flächigen Verteilen des Streuguts auf der Nutzfläche weist das Streugerät 1 zwei Streuorgane 2 auf. Die Streuorgane 2 sind als nebeneinander auf einer Ebene angeordnete, tellerförmige Streuscheiben ausgebildet, welche zum Verteilen des Streuguts gegensinnig rotieren. Das Streugut wird über eine Zuleitung und/oder Dosiereinrichtung aus einem oberhalb der Streuorgane 2 angeordneten Vorratsbehälter von oben auf die rotierenden Streuorgane 2, insbesondere einen jeweiligen Aufgabepunkt auf den Streuorganen 2, geleitet. Aufgrund der Rotationsgeschwindigkeit bzw. Drehzahl der Streuorgane 2 wird das Streugut unter Nutzung von Zentrifugalkräften entgegen der Fahrtrichtung R hinter dem Streugerät 1 schleudernd ausgebracht.

Der Bereich hinter und teilweise neben dem Streugerät 1, in welchem das Streuguts auf der Nutzfläche verteilt wird, wird als Streufächer F bezeichnet. Der Streufächer F umfasst in der Regel im Wesentlichen einen Kreissektor, wobei jedes Streuorgan 2 nur in einem Teilbereich des Streufächers F streut. Zwischen den Teilbereichen existiert jedoch in der Regel ein Übergangsbereich, in welchen Streugut von beiden Streuorganen 2 verteilt wird. Die Breite des Streufächers F quer zur Fahrtrichtung R, welche die Breite des Streugeräts 1 in der Regel deutlich übersteigt, kann über verschiedene Parameter des Streugeräts 1 eingestellt werden. Hierzu zählen beispielsweise die Rotationsgeschwindigkeit der Streuorgane 2, der Auftreffpunkt des Streuguts auf den Streuorganen 2 oder die Beschaffenheit des Streuguts.

Für eine einheitliche Versorgung der auf der Nutzfläche angebauten Pflanzen mit Streugut ist in der Regel eine möglichst gleichmäßige Verteilung des Streuguts in dem Streufächer F gewünscht. Die Verteilung des Streuguts innerhalb des Streufächers F wird als Streugutverteilung oder auch als Querverteilung bezeichnet. Um die Streugutverteilung detektieren und/oder auswerten zu können, weist das Streugerät 1 mehrere Streufächersensoren 3 auf, vgl. Fig. 1.

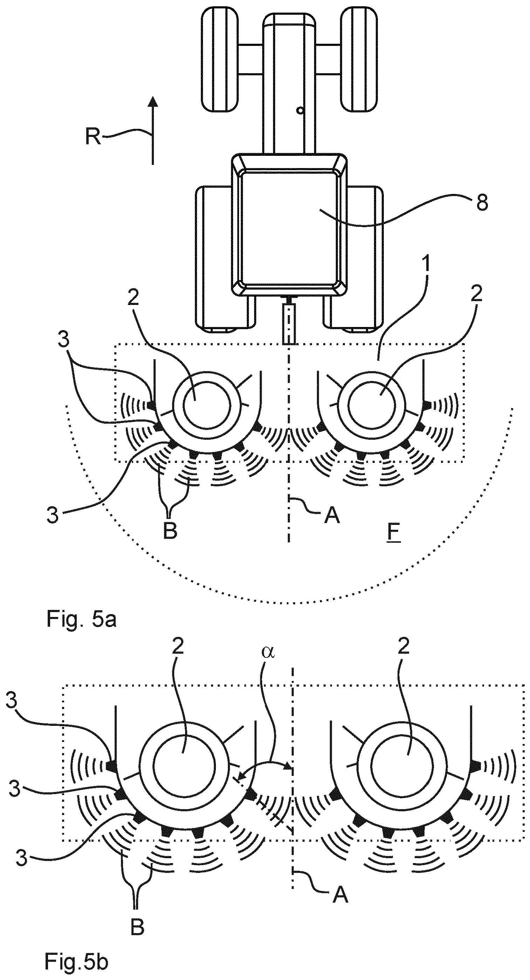

Die Streufächersensoren 3 sind als Radarsensoren ausgebildet und oberhalb der Streuorgane 2 angeordnet, wobei diese zur zuverlässigen Detektierung der Streugutverteilung vergleichsweise nah an den Streuorganen 2 positioniert sind. Alternativ können die Streufächersensoren 3 auch ein anderes Funktionsprinzip haben und/oder auch unterhalb der Streuorgane 2 und/oder am Vorratsbehälter angeordnet sein. Jeder Streufächersensor 3 überwacht dabei einen anderen, segment- oder sektorartigen Ausschnitt des Streufächers F, weshalb die einzelnen Streufächersensoren 3 etwa halbkreisförmig um das jeweilige Streuorgan 2 herum angeordnet sind, vgl. auch Fig. 5a. Die Sichtbereiche B der Streufächersensoren 3 sind dabei radial nach außen gerichtet. Die einzelnen Streufächersensoren 3 sind zur Abdeckung bzw. Detektierung des gesamten Streufächers F in unterschiedlichen Erfassungswinkein α relativ zu der Längsachse A des Streugeräts 1 ausgerichtet. Die beiden Streuorgane 2 des Streugeräts 1 sind symmetrisch zu beiden Seiten der Längsachse A angeordnet, vgl. Fig. 5a. Auch die den Streuorganen 2 zugeordneten Streufächersensoren 3 sind auf beiden Seiten der Längsachse A symmetrisch angeordnet. Es sind jedoch alternativ auch andere, beispielsweise unsymmetrische, Anordnungen der Streuorgane 2 und/oder der Streufächersensoren 3 denkbar, falls sich dies im jeweiligen Anwendungsfall als vorteilhaft herausstellen sollte.

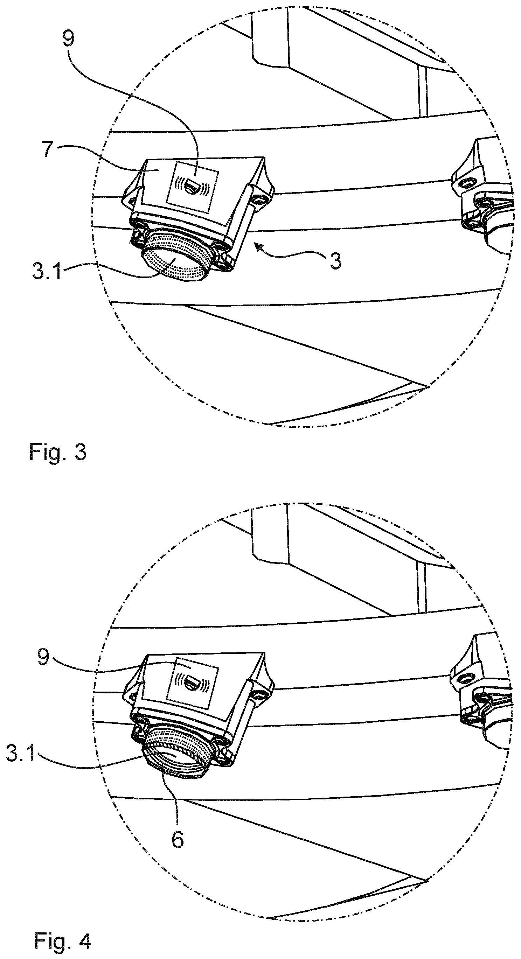

Die Streufächersensoren 3 weisen jeweils eine Sensorfläche 3.1 auf, vgl. Fig. 3, über welche ein Sensorsignal, vorliegend das Radarsignal, zur Erfassung der Streugutverteilung in dem Streufächer F ausgesendet und wieder empfangen wird. Für eine korrekte und zuverlässige Erfassung der Streugutverteilung ist es erforderlich, dass die Sensorfläche 3.1 möglichst frei von Verschmutzungen und Ablagerungen ist. So können beispielsweise Wassertropfen, also etwa Ablagerungen von Niederschlag, Nebel oder Tau, das Radarsignal stören. Das Sensorsignal wird mit einer Auswerteelektronik ausgewertet.

Insbesondere bei feuchten Streufächersensoren 3 besteht das Problem, dass feinkörnige, pulvrige oder staubförmige Verschmutzungen daran anhaften und sich zu hartnäckigen Verkrustungen auswachsen können. Dies ist insbesondere dann problematisch, wenn die Sensorfläche 3.1 verkrustet, da hierdurch die Erfassung bzw. Detektion der Streugutverteilung gestört werden kann. Die als Verkrustungen ausgebildeten Verschmutzungen können beispielsweise aus dem Streugut S selbst resultieren, welches beim Auftreffen auf die Streuorgane 2 und beim Verteilen bzw. Ausbringen über die Streuorgane 2 oftmals zumindest teilweise pulverisiert wird und als Staub in die Umgebungsluft abgegeben wird. Von dort kann es sich an den Streufächersensoren 3 anlagern. Ferner können ohnehin in der Umgebungsluft vorhandene oder vom Boden der Nutzfläche aufgewirbelte Partikel als Ablagerungen an den Streufächersensoren 3 anhaften.

Zur Sicherstellung eines verschmutzungs- und/oder ablagerungsunabhängigen Sensorbetriebs wird der Streufächersensor 3 deshalb mit einem Schwingungserreger 9 zumindest teilweise beaufschlagt. Hierdurch können Verschmutzungen, insbesondere Verkrustungen, auf dem Streufächersensor 3 verhindert, verringert, aufgebrochen und/oder entfernt werden. Hierdurch kann manueller Reinigungsbedarf reduziert und die Einsatzbereitschaft des Streufächersensors 3 erhöht werden.

Im Folgenden wird die Funktionsweise und die Ausgestaltung des Schwingungserregers 9 anhand der Darstellungen in den Fig. 3 und 4 erläutert. Der Schwingungserreger 9 ist an einem Gehäuse 7 des Streufächersensors 3 angeordnet, so dass die Sensorfläche 3.1 des Streufächersensors 3 zumindest teil- bzw. abschnittsweise schwingend angeregt werden kann. Zur Versorgung mit elektrischer Spannung ist der Streufächersensor 3 mit der Bordelektrik der Zugmaschine 8 und/oder des Streugeräts 1 verbunden.

Der Schwingungserreger 9 kann mit einer gewissen Beaufschlagungsfrequenz betrieben werden, welche von der Eigenfrequenz des Streugeräts 1 verschieden ist, wodurch eine effektive Schwingungsbeaufschlagung und damit eine effektive Entfernung von Ablagerungen an dem Streufächersensor 3 bewerkstelligt werden kann. Die Beaufschlagungsdauer, für welche die Schwingungsbeaufschlagung des Streufächersensors 3 stattfindet, kann insbesondere an den Grad der Verschmutzung angepasst sein. In der Regel beträgt die Beaufschlagungsdauer jedoch nur eine kurze Zeitspanne.

Alternativ oder zusätzlich kann der Schwingungserreger 9 dazu eingerichtet sein, den einen oder die mehreren Streufächersensoren 3 derart zu beaufschlagen, dass Ablagerungen und/oder Verschmutzungen von vornherein bzw. während des Streubetriebs vermieden oder zumindest weitestgehend reduziert werden. Des Weiteren kann vorgesehen sein, dass der eine oder die mehreren Streufächersensoren 3 vor Beginn des Streubetriebs und/oder in bestimmten, insbesondere einstellbaren, Intervallen und/oder Zeitspannen während des Streubetriebs mittels des Schwingungserregers 9 beaufschlagt werden.

Um eine Verzerrung oder Störung der Erfassung der Streugutverteilung in dem Streufächer F über den Streufächersensor 3 während der Schwingungsbeaufschlagung zu vermeiden, wird die Erfassung bzw. Auswertung der Streugutverteilung während der Schwingungsbeaufschlagung kurzfristig ausgesetzt. Nach Abschluss der Schwingungsbeaufschlagung wird die Erfassung bzw. Auswertung der Streugutverteilung über den dann gereinigten Streufächersensor 3 fortgesetzt.

Ergänzend oder alternativ kann die Auswerteelektronik zur Auswertung der Streugutverteilung derart ausgebildet sein, dass das Nutzsignal des Streufächersensors 3 aus dessen gesamten Signalspektrum herausgefiltert wird. Die Bandbreite bzw. das Spektrum der Beaufschlagungsfrequenz ist dabei derart gewählt, dass diese ebenfalls über die entsprechenden Filter aus dem Signalspektrum herausgefiltert werden. Auf diese Weise kann eine Störung der Erfassung bzw. Auswertung der Streugutverteilung durch den mit einem Schwingungserreger 9 versehenen Streufächersensor 3 vermieden oder sogar verhindert werden.

Ergänzend oder alternativ kann die Auswerteelektronik derart ausgebildet sein, dass der Algorithmus zur Auswertung der Streugutverteilung während der Schwingungsbeaufschlagung angepasst wird. Insbesondere können entsprechende Filter nur während der Schwingungsbeaufschlagung aktiviert und ansonsten deaktiviert sein.

Wie vorstehend erläutert, sind in der Regel mehrere Streufächersensoren 3 an einem Streugerät 1 angeordnet, vgl. Fig. 5a. Dabei kann entweder jeder Streufächersensor 3 einen Schwingungserreger 9 aufweisen oder nur ausgewählte Streufächersensoren 3 weisen einen Schwingungserreger 9 auf. Beispielsweise kann bei den Streufächersensoren 3, welche bauraum- oder positionsbedingt keiner oder nur geringer Exposition von Verschmutzungen ausgesetzt sind, auf einen Schwingungserreger 9 verzichtet werden.

Wenn jeder Streufächersensor 3 mit einem Schwingungserreger 9 ausgestattet ist, können diese entweder separat mit dem jeweiligen Schwingungserreger 9 beaufschlagt werden. Insbesondere kann die Steuerung der Schwingungserreger 9 derart ausgebildet sein, dass diese nur im Bedarfsfall, d. h. bei einer Verschmutzung des Streufächersensors 3 angeregt werden. Auch die Beaufschlagungsdauer und/oder die Beaufschlagungsfrequenz können separat eingestellt werden. Alternativ können sämtliche oder ein Teil der Streufächersensoren 3 zeitgleich mit dem jeweiligen Schwingungserreger 9 beaufschlagt werden, was den Steuerungsaufwand reduziert. Ferner ist eine Ausgestaltung denkbar, bei welcher ein Schwingungserreger 9 für mehrere Streufächersensoren 3 zuständig ist und diese sequenziell beaufschlagen kann.

In Abhängigkeit der Position der jeweiligen Streufächersensoren 3 relativ zu den Streuorganen 2 und/oder dem Streufächer F können diese über unterschiedliche Beaufschlagungsdauern beaufschlagt werden. Hierdurch ist eine weitere Anpassung an die jeweilige Verschmutzungssituation möglich. Streufächersensoren 3, welche stark verschmutzen, können für eine längere Beaufschlagungsdauer beaufschlagt werden.

Insbesondere bei feuchten Streufächersensoren 3 besteht das Problem, dass feinkörnige, pulvrige oder staubförmige Verschmutzungen daran anhaften und/oder sich zu Verkrustungen auswachsen können. Dies ist insbesondere dann problematisch, wenn die Sensorfläche 3.1 verschmutzt wird, da hierdurch die Erfassung bzw. Detektion der Streugutverteilung gestört werden kann. Die Verschmutzungen können beispielsweise aus dem Streugut selbst resultieren, welches beim Auftreffen auf die Streuorgane 2 und beim Verteilen bzw. Ausbringen über die Streuorgane 2 oftmals zumindest teilweise pulverisiert wird und als Staub in die Umgebungsluft abgegeben wird. Von dort kann es sich an den Streufächersensoren 3 anlagern. Ferner können ohnehin in der Umgebungsluft vorhandene oder vom Boden der Nutzfläche aufgewirbelte Partikel als Ablagerungen an den Streufächersensoren 3 anhaften, insbesondere wenn deren Oberflächen feucht sind.

Zur Sicherstellung eines verschmutzungs- und/oder ablagerungsunabhängigen Sensorbetriebs wird der Streufächersensor 3 deshalb mit einem Heizmittel 6 zumindest teilweise beheizt. Hierdurch kann der Streufächersensor 3 durch Verdunstung bzw. Verdampfung der Wasserablagerungen getrocknet werden. Auf einem trockenen Streufächersensor 3 können weniger Verschmutzungen oder sonstige Ablagerungen anhaften, was den Reinigungsbedarf zumindest reduziert oder sogar entbehrt und damit deren Einsatzbereitschaft erhöht.

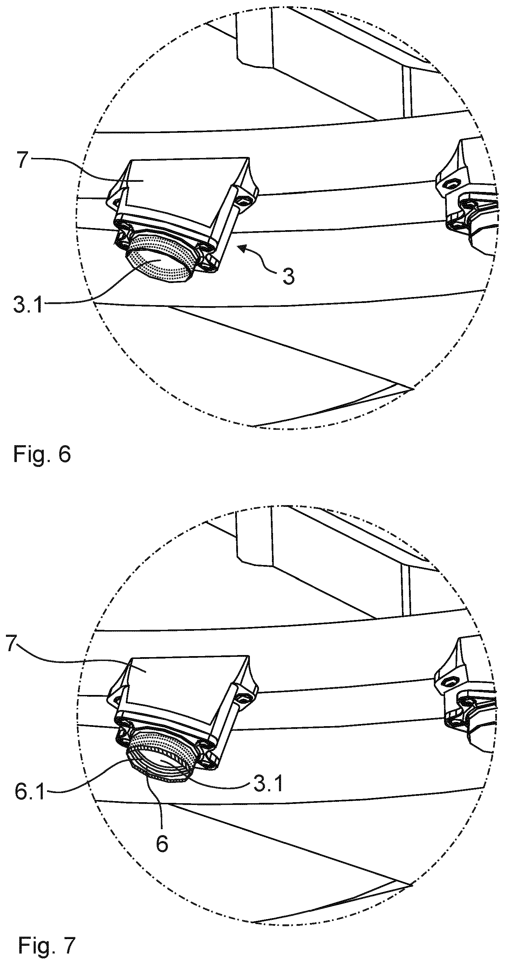

Nachfolgend wird die Funktionsweise und die Ausgestaltung des Heizmittels 6 anhand der Darstellungen in den Fig. 6 und 7 erläutert. Das Heizmittel 6 ist als elektrisches Heizmittel ausgebildet, welches über die Bordelektrik der Zugmaschine 8 mit elektrischem Strom versorgt werden kann. Alternativ kann das Heizmittel 6 über eine separate Stromversorgung mit Strom versorgt werden. Gemäß der Darstellung in Fig. 6 ist das Heizmittel als Heizdraht 6.1 ausgebildet, welcher an einem Gehäuse 7 des Streufächersensors 3 angeordnet ist. Der Heizdraht 6.1 ist außerhalb der Sensorfläche 3.1 des Streufächersensors 3 angeordnet. Der Heizdraht 6.1 ist spiralförmig um die Sensorfläche 3.1 des Streufächersensors 3 gewickelt. Alternativ kann der Heizdraht 6.1 auch nur abschnittsweise um die Sensorfläche 3.1 herum angeordnet sein oder in einem anderen Muster verlegt sein. Je nach Anwendungsfall kommen hierbei etwa eine mäanderförmige, eine bifilare, eine modulare oder eine anderweitige Verlegung des Heizdrahts 6.1 in Frage. Ferner kann der Heizdraht 6.1 alternativ oder zusätzlich auch in die Sensorfläche 3.1 integriert sein, wozu dieser vergleichsweise dünn ausgeführt sein muss, um die Detektion der Querverteilung des Streuguts S nicht zu stören oder zu behindern. Ferner kann der Heizdraht 6.1 auch innenseitig an dem Gehäuse 7 des Streufächersensors 3 angeordnet sein.

Darüber hinaus kann es im Hinblick auf eine einfache und schnelle Austauschbarkeit des Heizmittels 6 vorteilhaft sein, wenn dieses als lösbar mit dem Streufächersensor 3 verbundenes Einlege- bzw. Austauschelement ausgebildet ist.

Wenn das als Heizdraht 6.1 ausgebildete Heizmittel 6 mit elektrischem Strom beaufschlagt wird, gibt dieses Wärme ab und erwärmt dadurch den Streufächersensor 3. Durch die Anordnung des Heizdrahts 6.1 wird sichergestellt, dass vorwiegend die Sensorfläche 3.1 des Streufächersensors 3 beheizt wird. Infolge der Beheizung verdunstet das an dem Streufächersensor 3 und insbesondere an der Sensorfläche 3.1 anhaftende Wasser. Der Streufächersensor 3 bzw. die Sensorfläche 3.1 werden getrocknet. Eine Steuerung der Trocknung kann über die Heiztemperatur T_{H} und die Heizdauer D_{H} erfolgen, wobei je nach Umgebungsbedingungen unterschiedliche Heiztemperaturen T_{H} und Heizdauern D_{H} eingestellt werden können.

Alternativ oder zusätzlich zu einer Ausgestaltung als auf Grundlage einer Widerstandserwärmung arbeitender Heizdraht 6.1 kann das Heizmittel 6 auch anderweitig ausgebildet sein, beispielsweise als induktives Heizelement oder als auf Basis von Infrarotstrahlung oder Mikrowellenstrahlung arbeitendes Heizmittel 6.

Um die Einsatzbereitschaft des Streufächersensors 3 bereits unmittelbar zu Beginn der Streugutausbringung, etwa zu Arbeitsbeginn morgens früh, sicherstellen zu können, ist vorgesehen, dass der Streufächersensor 3 auch mit einer Vorheiztemperatur Tv über eine Vorheizdauer Dv beheizt werden kann. Durch das Vorheizen kann das sich während einer Betriebsunterbrechung, beispielsweise während einer nächtlichen Ruhepause, auf dem Streufächersensor 3 bildende Wasser entfernt werden. Insbesondere nachts bildet sich aufgrund von Kondensationsvorgängen oftmals Tau auf den Streufächersensoren 3, welcher durch das Vorheizen entfernt werden kann. Bevorzugt ist das Heizmittel 6 nach Art einer Standheizung so ausgebildet, dass ein automatisiertes Vorheizen derart erfolgt, dass der Streufächersensor 3 zum Beginn der Streugutausbringung zumindest teilweise getrocknet ist.

Da die relevanteste Quelle für Feuchtigkeitsablagerungen an dem Streufächersensor 3 auch während der Streugutausbringung am Tag die Taubildung ist, wird der Streufächersensor 3 zur Sicherstellung eines verschmutzungs- und/oder ablagerungsunabhängigen Sensorbetriebs mit dem Heizmittel 6 derart beheizt, dass eine Sensortemperatur Ts während des Streubetriebs stets oberhalb der Taupunkttemperatur T_{T} liegt. Hierdurch kann gewährleistet werden, dass die in der Luft vorhandene Feuchtigkeit nicht an dem Streufächersensor 3 kondensieren und sich als Wasserablagerung etwa an der Sensorfläche 3.1 ablagern kann.

Als Voraussetzung für eine solche Vorgehensweise muss die Sensortemperatur T_{S} ermittelt oder bestimmt werden. Der Wert der Sensortemperatur T_{S} entspricht einem Soll- bzw. Vorgabewert, welcher - wie erläutert - oberhalb der aktuellen Taupunkttemperatur T_{T} liegen soll. Zur Ermittlung der Sensortemperatur Ts kann entweder ein Temperatursensor an dem Streugerät 1 oder an dem Streufächersensor 3 vorgesehen sein oder die Sensortemperatur Ts kann mittels eines oder mehrerer Umgebungsparameter ermittelt werden. Hierfür kann die Sensortemperatur T_{S} beispielsweise anhand der aktuellen Temperatur der Umgebungsluft ermittelt werden oder anhand beliebiger anderer Größen festgestellt oder festgelegt werden.

Die Taupunkttemperatur T_{T} kann ebenfalls aus einem oder mehreren Umgebungsparametern ermittelt werden. Hierbei können insbesondere an dem Streugerät 1 ein oder mehrere Umgebungssensoren 4 zur Erfassung der Umgebungsparameter angeordnet sein. Alternativ oder zusätzlich können Umgebungssensoren 4 an der Zugmaschine 8 vorgesehen sein und/oder entfernt von dem Streugerät 1, beispielsweise am Rand der Nutzfläche, angeordnet sein. Ferner ist es denkbar, dass die Umgebungsparameter aus einer externen Datenquelle abgerufen werden. Hierbei kann es sich etwa um eine Datenbank oder eine internetbasierte Datenquelle handeln.

Die Umgebungsparameter umfassen Wetterparameter und Positionsparameter, wobei die Wetterparameter insbesondere solche Parameter umfassen, welche für die Bestimmung der Taupunkttemperatur T_{T} herangezogen werden können. Hierbei kann es sich insbesondere um Temperaturparameter und/oder Feuchtigkeitsparameter und/oder Luftdruckparameter handeln. Ferner sind weitere Wetterparameter denkbar.

Die Positionsparametern umfassen Lageparameter und Uhrzeitparameter . Die Lageparameter können insbesondere mittels eines Satellitensystems zur Positionsbestimmung, wie beispielsweise GPS, bestimmt werden. Ferner können die Lageparameter auch Informationen zur Höhe über dem Meeresniveau und/oder zur Beschaffenheit des Bodens der Nutzfläche, insbesondere betreffend deren Feuchtigkeit, und/oder zu den auf der Nutzfläche angebauten Pflanzen umfassen. Auch weitere, die Bildung von Feuchtigkeit und/oder Verschmutzungen auf dem Streufächersensor 3 beeinflussende Lageparameter sind hier denkbar.

Zu den Uhrzeitparametern können neben der Tageszeit auch Informationen über den Sonnenstand bzw. die Jahreszeit zählen. Darüber hinaus sind auch weitere Parameter denkbar, welche zur Ermittlung oder Abschätzung der Taupunkttemperatur T_{T} und/oder der Sensortemperatur Ts herangezogen werden können.

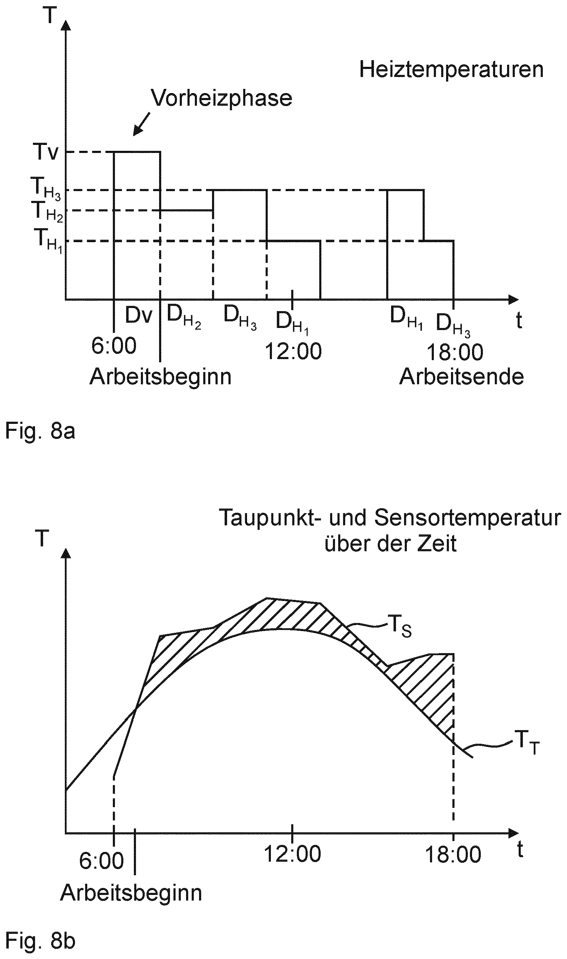

Im Folgenden wird anhand der Darstellungen in Fig. 8a und Fig. 8b erläutert, wie ein beispielhafter Streufächersensor 3.1 vor und während der Streugutausbringung mit dem Heizmittel 6 beheizt wird. Das schematische Diagramm in Fig. 8a zeigt dabei eine beispielhafte Sequenz von Heizintervallen I über einen Arbeitstag, welcher mit dem Arbeitsbeginn um 8:00 Uhr morgens beginnt. Damit der Streufächersensor 3 zum Arbeitsbeginn von nächtlicher Taubildung oder anderweitiger Benetzung mit Feuchtigkeit getrocknet ist, beginnt um 6:00 Uhr die Vorheizphase. In dieser Vorheizphase wird das Heizmittel 6 auf eine Vorheiztemperatur Tv eingestellt, welche über die Vorheizdauer Dv gehalten wird. Wie dies anhand des die gleiche Zeitskala wie das Diagramm gemäß Fig. 8a aufweisenden Diagramms gemäß Fig. 8b erkannt werden kann, liegt die Sensortemperatur Ts zu Beginn der Vorheizdauer Dv aufgrund der nächtlichen Abkühlung auf einem vergleichsweise niedrigen Niveau. Da die Sensortemperatur Ts auch unterhalb der Taupunkttemperatur T_{T} liegt, ist mit einer Taubildung auf dem Streufächersensor 3 zu rechnen. Infolge der Beheizung mit dem Heizmittel 6 ab 6:00 Uhr steigt die Sensortemperatur Ts und überschreitet die Taupunkttemperatur T_{T}, so dass der Streufächersensor 3 trocknet. Der schraffiert dargestellte Bereich in Fig. 8b symbolisiert die Trocknung des Streufächersensors 3, da in diesem Fall die Sensortemperatur Ts oberhalb der Taupunkttemperatur T_{T} liegt.

Zum Arbeitsbeginn um 08:00 Uhr, welcher den Start der Streugutausbringung mit dem Streugerät 1 markiert, liegt die Sensortemperatur Ts infolge der Vorheizung deutlich oberhalb der Taupunkttemperatur T_{T}. Um eine vergleichsweise energieeffiziente Beheizung zu ermöglichen, wird die Heiztemperatur T_{H} anschließend auf einen mittleren Wert T_{H2} eingestellt, welcher unterhalb der Vorheiztemperatur Tv liegt, und für die Heizdauer D_{H2} gehalten, vgl. Fig. 8a. Aufgrund der geringeren Heiztemperatur D_{H2} nähert sich die Sensortemperatur Ts der im Tagesverlauf zunächst ansteigenden Taupunkttemperatur T_{T}. Um zu vermeiden, dass die Sensortemperatur Ts unter die Taupunkttemperatur T_{T} fällt, wird die Heiztemperatur für eine Heizdauer D_{H3} auf den Wert T_{H3} eingestellt, wobei die Heiztemperatur T_{H3} größer ist als die Heiztemperatur T_{H2}. Hierdurch steigt die Sensortemperatur Ts wieder an und die Differenz zur Taupunkttemperatur T_{T} vergrößert sich während der Heizdauer D_{H3}.

Anschließend kann für eine Heizdauer D_{H1} mit einer niedrigeren Heiztemperatur T_{H1} beheizt werden, da keine Gefahr der Unterschreitung der Taupunkttemperatur T_{T} durch die Sensortemperatur Ts zu befürchten ist. Im weiteren Tagesverlauf, insbesondere zur Mittagszeit, in welcher wegen hoher Sonneneinstrahlung hohe Umgebungstemperaturen zu verzeichnen sind, kann die Beheizung des Streufächersensors 3 sogar ausgeschaltet werden. Erst am späteren Nachmittag wird der Streufächersensor 3 wieder beheizt, und zwar zunächst für eine Heizdauer D_{H3} mit der Heiztemperatur T_{H3} und im Anschluss daran für eine Heizdauer D_{H1} mit der Heiztemperatur T_{H1}.

Anhand des vorstehend erläuterten Beispiels einer Beheizung eines Streufächersensors 3 im Tagesverlauf wird deutlich, wie über unterschiedliche Heizdauern D_{H} und Vorheizdauern Dv sowie Heiztemperaturen T_{H} und Vorheiztemperaturen Tv die Sensortemperatur Ts derart gesteuert werden kann, dass die Sensortemperatur Ts während der Streugutausbringung stets oberhalb der Taupunkttemperatur T_{T} liegt. Hierdurch wird sichergestellt, dass sich kein Tau an dem Streufächersensor 3 bilden kann. Da der Streufächersensor 3 insoweit trocken bleibt bzw. getrocknet wird, können Partikel des Streuguts und sonstige Verschmutzungen nicht oder nur in geringem Ausmaß an dem Streufächersensor 3 anhaften und/oder eine Verkrustung bilden. Ein störungsfreier Sensorbetrieb zur Erfassung bzw. Detektion der Querverteilung des Streuguts in dem Streufächer F kann auf diese Weise sichergestellt werden. Ferner wird der Reinigungsaufwand zur Säuberung des Streufächersensors 3 und insbesondere der Sensorfläche 3.1 erheblich reduziert.

Die vorstehend erläuterten Temperaturverläufe gemäß Fig. 8a und 8b sind dabei exemplarisch zu verstehen. Insbesondere kann der Verlauf der Heiztemperaturen gemäß Fig. 8a beliebig angepasst werden, sowohl betreffend die Heiz- und Vorheiztemperaturen T_{H}, Tv als auch die Heiz- und Vorheizdauern D_{H}, D_{V}. Ferner kann auch die Anzahl und Länge der Heizintervalle I beliebig an den jeweiligen Anwendungsfall angepasst werden. Zudem können auch andere Temperaturwerte als die Sensortemperatur Ts und die Taupunkttemperatur T_{T} als Referenz- oder Vergleichswerte herangezogen werden.

Im Folgenden wird anhand der Darstellungen in den Fig. 5a und b erläutert, wie die Heizmittel 6 der einzelnen Streufächersensoren 3, welche unterschiedliche Ausschnitte bzw. Sektoren des Streufächers F überwachen, separat angesteuert werden können. Je nach Position der Streufächersensoren 3 relativ zu den Streuorganen 2 bzw. zu der Längsachse A sind diese größerer oder geringerer Gefahr von Taubildung und Ablagerung von Wasser sowie Feuchtigkeit ausgesetzt. So können etwa nahe der Längsachse A positionierte Streufächersensoren 3 durch Elemente des Streugeräts 1 etwas geschützter sein als in äußeren Bereichen des Streugeräts 1 angeordnete Streufächersensoren 3. Andererseits können die einzelnen Streufächersensoren 3 unterschiedlichen Belastungen oder Expositionen von Staub- oder Verschmutzungspartikeln ausgesetzt sein. Daher sind die Heizmittel 6 der verschiedenen Streufächersensoren 3 separat ansteuerbar, wodurch deren Beheizung auf die jeweilige Einbausituation angepasst werden kann. Streufächersensoren 3, welche in besonders exponierten Positionen angeordnet sind, können beispielsweise über längere Heizdauern D_{H} bzw. Vorheizdauern D_{V} oder mit höheren Heiztemperaturen T_{H} bzw. Vorheiztemperaturen Tv beheizt werden, als Streufächersensoren 3, welche keiner größeren Verschmutzung durch Wasser oder Staubpartikel ausgesetzt sind. Alternativ kann es im Sinne einer vereinfachten Steuerung jedoch auch vorteilhaft sein, alle Streufächersensoren 3 zeitgleich bzw. synchron zu beheizen. Ferner ist es denkbar, nur einen Teil der Streufächersensoren 3 mit Heizmitteln 6 zu versehen.

Die Streufächersensoren 3 können auch mit einer in den Figuren nicht dargestellten Druckluftzuführung zur Reinigung der Sensorflächen 3.1 mit Druckluft beaufschlagt werden. Hierbei kann insbesondere jedem Streufächersensor 3 eine Druckluftzuführung zugeordnet sein. Alternativ kann nur einem Teil der Streufächersensoren 3 eine Druckluftzuführung zugeordnet sein. Die Druckluftzuführung kann insbesondere zur Reinigung und/oder Trocknung auf die jeweilige Sensorfläche 3.1 gerichtet sein. In analoger Weise zu dem intervallweisen Beheizen mittels des Heizmittels 6 können die Streufächersensoren 3 über verschiedene Belüftungsdauern mit Druckluft beaufschlagt werden. Ferner können auch unterschiedliche Drucklevel der Druckluft eingestellt werden. Die Belüftungsdauern und/oder die Drucklevel der Druckluft können intervallweise angepasst werden. Insbesondere können die Belüftungsdauern und/oder die Drucklevel der Druckluft an die jeweiligen Verschmutzungen und/oder Ablagerungen angepasst werden.

Die Streufächersensoren 3 und insbesondere deren Sensorflächen 3.1 können auch mit einer wasser- und/oder schmutzabweisenden Beschichtung versehen sein, welche das Anhaften von Feuchtigkeit und/oder Schmutz reduzieren kann.

Das vorstehend beschriebene Verfahren zum Ausbringen von Streugut S, das Streugerät 1 zum Ausbringen von Streugut sowie der Streufächersensor 3 zeichnen sich dadurch aus, dass die Streugutverteilung zuverlässig detektiert werden kann, ohne dass hierzu aufwendige Reinigungen der Sensorflächen 3.1 der Streufächersensoren 3 von Verkrustungen und Ablagerungen durchgeführt werden müssen.

### Bezugszeichen

- 1: Streugerät
- 2: Streuorgan
- 3: Streufächersensor
- 3.1: Sensorfläche
- 4: Umgebungssensor

- 6: Heizmittel
- 6.1: Heizdraht
- 7: Gehäuse
- 8: Zugmaschine
- 9: Schwingungserreger

- A: Längsachse
- B: Sichtbereich
- D_{H}: Heizdauer
- D_{V}: Vorheizdauer
- F: Streufächer
- I: Heizintervall
- R: Fahrtrichtung
- t: Zeit
- T: Temperatur
- T_{H}: Heiztemperatur
- T_{S}: Sensortemperatur
- T_{T}: Taupunkttemperatur
- T_{V}: Vorheiztemperatur

- α: Erfassungswinkel

## Patentansprüche

1. Verfahren zum Ausbringen von Streugut mit einem landwirtschaftlichen Streugerät (1), welches mindestens ein Streuorgan (2) zur Erzeugung eines Streufächers (F) und mindestens einen Streufächersensor (3) zur Überwachung der Streugutverteilung innerhalb des Streufächers (F) aufweist,
**dadurch gekennzeichnet,**
**dass** der Streufächersensor (3) zur Sicherstellung eines verschmutzungs- und/oder ablagerungsunabhängigen Sensorbetriebs mit einem Schwingungserreger (9) zumindest teilweise beaufschlagt wird,
**dass** der Streufächersensor (3) zur Reinigung einer Sensorfläche (3.1) mit dem Schwingungserreger (9) mit einer von der Eigenfrequenz des Streugeräts (1) verschiedenen Beaufschlagungsfrequenz über eine Beaufschlagungsdauer beaufschlagt wird, und
**dass** die Überwachung der Streugutverteilung mit dem Streufächersensor (3) während der Beaufschlagungsdauer unterbrochen wird.

2. Verfahren nach Anspruch 1, **dadurch gekennzeichnet, dass** die Beaufschlagungsfrequenz derart ausgewählt und eingestellt wird, dass die Überwachung der Streugutverteilung nicht gestört wird.

3. Verfahren nach einem der vorhergehenden Ansprüche, **dadurch gekennzeichnet, dass** der Streufächersensor (3) während einer Unterbrechung der Streugutausbringung mit dem Schwingungserreger (9) zumindest teilweise beaufschlagt wird.

4. Verfahren nach einem der vorhergehenden Ansprüche, **gekennzeichnet durch** mehrere Streufächersensoren (3), welche zur Reinigung der Sensorflächen (3.1) separat mit jeweils einem Schwingungserreger (9) oder gruppenweise mit jeweils einem Schwingungserreger (9) zumindest teilweise beaufschlagt werden.

5. Verfahren nach Anspruch 4, **dadurch gekennzeichnet, dass** die Streufächersensoren (3) über unterschiedliche Beaufschlagungsdauern beaufschlagt werden.

6. Verfahren nach Anspruch 5, **dadurch gekennzeichnet, dass** die Streufächersensoren (3) in Abhängigkeit ihrer Position relativ zu dem Streuorgan (2) und/oder zu dem Streufächer (F) über unterschiedliche Beaufschlagungsdauern beaufschlagt werden.

## Claims

1. Method for outputting spreading material with an agricultural spreading device (1) which has at least one spreading element (2) for generating a spreading fan (F) and at least one spreading fan sensor (3) for monitoring the distribution of the spreading material within the spreading fan (F),
**characterized**
**in that** the spreading fan sensor (3) is at least partially acted upon by a vibration exciter (9) in order to ensure that the sensor operation is independent of contamination and/or deposits,
**in that** the spreading fan sensor (3) is acted upon by the vibration exciter (9) with an application frequency different from the natural frequency of the spreading device (1) for an application period, in order to clean a sensor surface (3.1), **and**
**in that** the monitoring of the spreading material distribution with the spreading fan sensor (3) is interrupted during the application period.

2. Method according to claim 1, **characterized in that** the application frequency is selected and set in such a way that the monitoring of the spreading material distribution is not disturbed.

3. Method according to either of the preceding claims, **characterized in that** the spreading fan sensor (3) is at least partially acted upon by the vibration exciter (9) during an interruption of the spreading material output.

4. Method according to any of the preceding claims, **characterized by** a plurality of spreading fan sensors (3) which are at least partially acted upon separately by a vibration exciter (9) or in groups by a vibration exciter (9) in order to clean the sensor surfaces (3.1).

5. Method according to claim 4,
**characterized in that** the spreading fan sensors (3) are acted upon for different application periods.

6. Method according to claim 5,
**characterized in that** the spreading fan sensors (3) are acted upon for different application periods depending on their position relative to the spreading element (2) and/or to the spreading fan (F).

## Revendications

1. Procédé pour l'épandage de matériau d'épandage avec un appareil d'épandage (1) agricole, lequel présente au moins un organe d'épandage (2) permettant de générer un éventail d'épandage (F) et au moins un capteur d'éventail d'épandage (3) permettant de surveiller la répartition de matériau d'épandage à l'intérieur de l'éventail d'épandage (F),
**caractérisé en ce**
**que** le capteur d'éventail d'épandage (3) est soumis, au moins en partie, à l'action d'un oscillateur (9) afin de garantir un fonctionnement de capteur indépendant de l'encrassement et/ou des dépôts,
**que** le capteur d'éventail d'épandage (3) est soumis à l'action de l'oscillateur (9) pendant une durée d'action à une fréquence d'action différente de la fréquence propre de l'appareil d'épandage (1) afin de nettoyer une surface de capteur (3.1), et
**que** la surveillance de la répartition de matériau d'épandage avec le capteur d'éventail d'épandage (3) est interrompue pendant la durée d'action.

2. Procédé selon la revendication 1, **caractérisé en ce que** la fréquence d'action est choisie et réglée de telle sorte que la surveillance de la répartition de matériau d'épandage n'est pas perturbée.

3. Procédé selon l'une des revendications précédentes, **caractérisé en ce que** le capteur d'éventail d'épandage (3) est soumis, au moins en partie, à l'action de l'oscillateur (9) pendant une interruption de l'épandage de matériau d'épandage.

4. Procédé selon l'une des revendications précédentes, **caractérisé par** plusieurs capteurs d'éventail d'épandage (3) qui, pour le nettoyage des surfaces de capteurs (3.1), sont soumis au moins en partie, soit séparément à respectivement une action d'oscillateur (9), soit par groupes à respectivement une action d'oscillateur (9).

5. Procédé selon la revendication 4,
**caractérisé en ce que** les capteurs d'éventail d'épandage (3) sont soumis à différentes durées d'action.

6. Procédé selon la revendication 5,
**caractérisé en ce que** les capteurs d'éventail d'épandage (3) sont soumis à différentes durées d'action en fonction de leur position par rapport à l'organe d'épandage (2) et/ou à l'éventail d'épandage (F).
